# EUROPÄISCHE PATENTSCHRIFT

(11) **EP 2 574 750 B1**
(45) Veröffentlichungstag und Bekanntmachung des Hinweises auf die Patenterteilung: **14.06.2017**
(21) Anmeldenummer: 12185160.4
(22) Anmeldetag: 20.09.2012
(51) Int. Cl.: F01N 3/28

(54) **Misch- und/oder Verdampfungseinrichtung**
Mixing and/or evaporating device
Dispositif de mélange et/ou d'évaporation

(30) Priorität: 28.09.2011 DE 102011083637
(43) Veröffentlichungstag der Anmeldung: 03.04.2013
(73) Patentinhaber: Eberspächer Exhaust Technology GmbH & Co. KG, 66539 Neunkirchen (DE)
(72) Erfinder: Leicht, Sebastian, 72406 Bisingen (DE); Neumann, Felix, 73773 Aichwald-Aichelberg (DE); Arlt, Benjamin, 73773 Aichwald (DE); Semenov, Oleksandr, 73207 Plochingen (DE); Calvo, Silvia, 73730 Esslingen (DE); Braun, Joachim, 73732 Esslingen (DE); Wolf, Tobias, 73257 Köngen (DE)
(74) Vertreter: BRP Renaud & Partner mbB Rechtsanwälte Patentanwälte Steuerberater

(56) Entgegenhaltungen:
- EP-A1- 2 111 917
- DE-A1-102006 059 761
- US-A- 3 438 198
- US-A1- 2009 071 133
- US-A1- 2010 083 643

## Beschreibung

Die vorliegende Erfindung betrifft eine Misch- und/oder Verdampfungseinrichtung für eine Abgasanlage einer Brennkraftmaschine, insbesondere eines Kraftfahrzeugs. Die Erfindung betrifft außerdem eine mit einer derartigen Einrichtung ausgestattete Abgasanlage sowie einen mit einer derartigen Einrichtung ausgestatteten SCR-Katalysator.

Üblicherweise ist eine Abgasanlage einer Brennkraftmaschine mit Einrichtungen zum Reinigen bzw. Nachbehandeln der von der Brennkraftmaschine weggeführten Abgase ausgestattet. Dabei kann es erforderlich sein, ein flüssiges Edukt in den Abgasstrom einzubringen, darin zu verdampfen und mit dem Abgas zu vermischen. Beispielsweise kann es erforderlich sein, stromauf eines Oxidationskatalysators einen Kraftstoff dem Abgas zuzumischen, um durch eine exotherme Umsetzung des Kraftstoffs im Oxidationskatalysator eine Aufheizung des Abgasstroms zu bewirken. Der aufgeheizte Abgasstrom kann dann stromab des Oxidationskatalysators dazu genutzt werden, eine weitere Abgasnachbehandlungseinrichtung auf Betriebstemperatur bzw. auf Regenerationstemperatur aufzuheizen, beispielsweise einen anderen Katalysator oder ein Partikelfilter. Ferner sind SCR-Systeme bekannt, die mit selektiver katalytischer Reaktion arbeiten und mit einem SCR-Katalysator ausgestattet sind, der NO_{X} aus dem Abgasstrom aufnimmt. Stromauf des SCR-Katalysators wird dem Abgasstrom ein geeignetes Reduktionsmittel zugeführt, beispielsweise Ammoniak bzw. Harnstoff, vorzugsweise eine wässrige Harnstofflösung. Im SCR-Katalysator bewirkt das Ammoniak dann eine Umwandlung der eingelagerten Stickoxide in Stickstoff und Wasser.

Für alle in flüssiger Form dem Abgasstrom zugeführten Edukte gilt, dass der gewünschte Effekt nur dann zufriedenstellend erreichbar ist, wenn zwischen der Einleitstelle des flüssigen Edukts und einem Verbrauchsort des Edukts eine hinreichende Verdampfung des Edukts sowie eine hinreichende Durchmischung des gasförmigen Edukts mit dem Abgasstrom erfolgen kann. Zu diesem Zweck kommen die eingangs genannten Misch- und/oder Verdampfungseinrichtungen zum Einsatz, die im Strömungspfad des Abgases zwischen der Einleitstelle des Edukts und der Verbrauchsstelle des Edukts angeordnet werden.

Eine solche Misch- oder Verdampfungseinrichtung ist beispielsweise aus der EP2111917 A1 bekannt. Die vorliegende Erfindung beschäftigt sich mit dem Problem, für eine Einrichtung der eingangs genannten Art bzw. für einen damit ausgestatteten SCR-Katalysator bzw. für eine damit ausgestattete Abgasanlage eine verbesserte oder zumindest eine andere Ausführungsform anzugeben, die sich durch einen einfachen und somit preiswerten Aufbau auszeichnet, wobei außerdem ein geringer Durchströmungswiderstand angestrebt ist. Ferner ist eine verbesserte Strömungsverteilung über den Querschitt angestrebt, was vorteilhaft zu einer Reduzierung des Gegendrucks führt.

Dieses Problem wird bei der vorliegenden Erfindung insbesondere durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, bei einer Einrichtung, die einen Tragkörper aufweist, der einen quer zur Axialrichtung der Einrichtung verlaufenden, durchströmbaren Querschnitt der Einrichtung in der Umfangsrichtung umschließt, und an dem zumindest eine Leitschaufel angeordnet ist, die quer zur Axialrichtung absteht, zumindest eine solche Leitschaufel mit einem dachförmigen Profil auszustatten. Durch die Verwendung wenigstens einer Leitschaufel, die ein dachförmiges Profil besitzt, kann eine Auftrefffläche für in den Abgasstrom eingebrachtes flüssiges Edukt innerhalb der Misch- und/oder Verdampfungseinrichtung vergrößert werden, sodass die Gefahr eines Tröpfchendurchschlags durch die Einrichtung hindurch reduziert ist. Dementsprechend kann die Effizienz der Einrichtung hinsichtlich der Verdampfungswirkung vergrößert werden. Die dachförmige Profilierung der wenigstens einen Leitschaufel führt außerdem dazu, dass an der jeweiligen Leitschaufel die Abgasströmung nach zwei Seiten hin abgelenkt wird, sodass auch eine intensive Durchmischung realisierbar ist. Auch nimmt die Abgasströmung das auf die Leitschaufel auftreffende flüssige Edukt teilweise mit, wodurch es auf der Leitschaufel verteilt wird, was die Verdampfung begünstigt.

Besonders zweckmäßig erfolgt die dachförmige Profilierung derart, dass das dachförmige Profil der jeweiligen Leitschaufel zwei Leitflächen besitzt, die über einen First oder Scheitel miteinander verbunden sind. Bspw. kann das Profil nach Art eines Giebeldachs geformt sein, sodass ein kantiger Firstbereich zwei ebene Leitflächen miteinander verbindet. Ebenso kann das Profil ein Tonnendach bilden, bei dem zwei gekrümmte Dachflächen über einen runden Scheitel ineinander übergehen. Ebenso sind Mischformen denkbar, sodass bspw. zwei gekrümmte Leitflächen über einen kantigen First miteinander verbunden sind.

Die hier vorgestellte Einrichtung zeichnet sich außerdem dadurch aus, dass die jeweilige Schaufelreihe, unabhängig davon, ob sie anströmseitig oder abströmseitig angeordnet ist, von der Abgasströmung im Wesentlichen drallfrei durchströmbar ist. Mit anderen Worten, die Abgasströmung wird bei der Umströmung der Leitschaufeln bzw. bei der Durchströmung einer Schaufelreihe der Einrichtung nicht mit einem Drall beaufschlagt. Hierdurch erhält die Einrichtung einen besonders geringen Durchströmungswiderstand.

Gemäß einer besonders vorteilhaften Ausführungsform kann der jeweilige First bzw. der jeweilige Scheitel anströmseitig angeordnet sein. Zweckmäßig sind dann die beiden Leitflächen gegenüber der Axialrichtung entgegengesetzt angestellt. Insbesondere können die beiden Leitflächen betragsmäßig den gleichen Anstellwinkel gegenüber der Axialrichtung besitzen, wodurch sich eine symmetrische Strömungsumlenkung bzw. Strömungsteilung an der jeweiligen dachförmigen Leitschaufel ergibt. Erfindungsgemäß ist die jeweilige Leitschaufel ausschließlich über die eine Leitfläche mit dem Tragkörper verbunden. Hierdurch ergibt sich ein besonders einfach realisierbarer Aufbau für die Einrichtung. Dabei ist die andere Leitfläche bzgl. des Tragkörpers freistehend angeordnet. Mit anderen Worten, die andere Leitfläche besitzt keinen Kontakt zum Tragkörper und ist mit diesem nur indirekt, nämlich über die eine Leitfläche verbunden.

Bei einer weiteren Weiterbildung kann vorgesehen sein, dass die jeweilige Leitschaufel auch im Bereich des Firstes gegenüber dem Tragkörper freistehend angeordnet ist. Hierdurch sind insbesondere thermische Dehnungseffekte ohne Spannungsaufbau möglich.

Zusätzlich oder alternativ kann vorgesehen sein, dass die jeweilige Schaufel zwei im Wesentlichen rechteckige Leitflächen aufweist, die randseitig jeweils vier geradlinige Seiten aufweisen, wobei je eine Seite der beiden Leitflächen im First aneinandergrenzen und wobei die jeweilige Leitschaufel nur über eine einzige dieser Seiten mit dem Tragkörper verbunden ist. Mit anderen Worten, von den sechs außenliegenden Seiten, die den Umfangsrand der Leitschaufeln definieren, ist nur eine mit dem Tragkörper verbunden, während die anderen dazu lose oder freistehend, also ohne Kontakt dazu angeordnet sind. Die beiden innenliegenden Seiten liegen im First aneinander an.

Ein besonders kompakter Aufbau ergibt sich, wenn mehrere Leitschaufeln vorgesehen sind, die in einer ersten Richtung, die senkrecht auf der Axialrichtung der Einrichtung steht, vom Tragkörper abstehen, in einer zweiten Richtung nebeneinander angeordnet sind, die sich senkrecht zur Axialrichtung und senkrecht zur ersten Richtung erstreckt.

Zweckmäßig kann bei einer anderen Ausführungsform vorgesehen sein, dass das Profil der jeweiligen Leitschaufel winkelförmig oder bogenförmig ausgestaltet ist. Ein winkelförmiges Profil führt zu der vorstehend genannten Giebeldachform, während ein bogenförmiges Profil zu der vorstehend genannten Tonnendachform führt.

Bei einer anderen vorteilhaften Ausführungsform kann die jeweilige Leitschaufel mit dem dachförmigen Profil an einer Anströmseite des Tragkörpers angeordnet sein, wobei an einer Abströmseite des Tragkörpers zumindest eine weitere Leitschaufel angeordnet ist, die ein anderes Profil besitzt. Das andere Profil kann bspw. ein geradliniges Profil sein, das gegenüber der Axialrichtung angestellt ist. Insbesondere kann der Tragkörper an der Abströmseite somit wenigstens eine herkömmliche Leitschaufel ohne dachförmigem Profil aufweisen.

Die einzelnen Leitschaufeln mit geradlinigem Profil bzw. die Leitflächen der dachförmig profilierten Leitschaufeln können eben konfiguriert sein. Ebene Leitschaufeln bzw. Leitflächen besitzen entlang ihrer Längsrichtung stets denselben Anstellwinkel gegenüber der Abgasströmung bzw. gegenüber der Axialrichtung. Ebenso ist es grundsätzlich möglich, zumindest eine oder alle Leitschaufeln bzw. Leitflächen mit einer Verwindung zu versehen, so dass sich ihr Anstellwinkel entlang der Längsrichtung der Leitschaufel verändert.

Gemäß einer vorteilhaften Weiterbildung kann die jeweilige an der Abströmseite angeordnete Leitschaufel axial fluchtend zu einer Abströmkante einer der Leitflächen der an der Anströmseite angeordneten Leitschaufel mit dachförmigem Profil angeordnet sein und diese quer zur Axialrichtung überdecken. Auf diese Weise liegt eine Auftrefffläche der abströmseitigen Leitschaufel in der Flucht einer Abströmkante der anströmseitigen dachförmigen Leitschaufel. Bei dieser Ausführungsform kann Flüssigkeit, die auf die anströmseitige dachförmige Leitschaufel auftrifft, durch die Strömungskräfte an den Leitflächen abgeleitet werden, zu einer Abströmkante der jeweiligen Leitfläche gelangen und dort in Form wenigstens eines Tropfens von der Abgasströmung mitgenommen werden und dann auf die Leitfläche der abströmseitigen Leitschaufel auftreffen, wo sie erneut der Abgasströmung und einer intensiven Verdampfungswirkung ausgesetzt ist. Der hier vorgestellte Aufbau reduziert somit die Gefahr eines Tröpfchendurchschlags durch die Einrichtung. Bemerkenswert ist in diesem Zusammenhang, dass die anströmseitigen, dachförmig profilierten Leitschaufeln eine Aufteilung des Abgasstroms und des mitgeführten Eduktstroms bewirken, so dass auf die abströmseitigen, insbesondere nicht dachförmig profilierten, Leitschaufeln jeweils nur der halbe Strom an Abgas und Edukt auftrifft, wodurch sich die für die Verdampfung des Edukstroms zur Verfügung stehende Fläche relativ gesehen verdoppelt.

Gemäß einer besonders zweckmäßigen Ausführungsform ist der durchströmbare Querschnitt der Einrichtung flach. Das bedeutet, dass in einer ersten Richtung, die senkrecht zur Axialrichtung verläuft, ein Durchmesser des durchströmbaren Querschnitts größer ist als ein Durchmesser in einer zweiten Richtung, die senkrecht zur ersten Richtung und senkrecht zur Axialrichtung verläuft, wodurch sich der durchströmbare Querschnitt der Einrichtung signifikant von einem kreisförmigen Querschnitt unterscheidet. Bspw. ist der Durchmesser des durchströmbaren flachen Querschnitts in der ersten Richtung mindestens doppelt so groß wie in der zweiten Richtung. Durch diese Bauform kann die Einrichtung besonders einfach in eine flach bauende Abgasanlage bzw. in ein flach bauendes Gehäuse einer Abgasbehandlungseinrichtung, z. B. eines SCR-Katalysators, eingebaut werden. Zweckmäßig kann der Tragkörper dann zwei einander gegenüberliegende lange Seitenwände und zwei einander gegenüberliegende kurze Seitenwände aufweisen, wobei die kurzen Seitenwände jeweils die beiden langen Seitenwände miteinander verbinden. Die langen Seitenwände können dabei eben oder gekrümmt sein. Die kurzen Seitenwände können bevorzugt gekrümmt sein. Somit sind ovale oder elliptische Querschnitte ebenfalls grundsätzlich flach.

Die Begriffe "lang" bzw. "kurz" sind nicht absolut zu verstehen, sondern relativ, sodass damit nur zum Ausdruck gebracht werden soll, dass eine lange Seitenwand in der Umfangsrichtung des Tragkörpers eine größere Erstreckung besitzt als eine kurze Seitenwand.

Die wenigstens eine Leitschaufel mit dem dachförmigen Profil ist dann zweckmäßig an einer langen Seitenwand zumindest an einem axialen Ende der Seitenwand bzw. des Tragkörpers bzw. der Einrichtung angeordnet und steht von dieser langen Seitenwand in Richtung zur anderen langen Seitenwand ab. Durch diese Bauform ist es besonders einfach möglich, am Tragkörper eine Leitschaufelreihe auszubilden, die mehrere quer zur Axialrichtung nebeneinander angeordnete, parallel zueinander verlaufende Leitschaufeln umfasst. Insbesondere erstrecken sich die einzelnen Leitschaufeln dabei senkrecht zur Axialrichtung und senkrecht zu der Richtung, in der sie nebeneinander in der jeweiligen geradlinigen Schaufelreihe angeordnet sind.

Für die Anordnung derartiger Schaufelreihen an den langen Seitenwänden des Tragkörpers ergeben sich unterschiedliche Kombinationsmöglichkeiten. Bspw. kann eine Schaufelreihe nur an einem axialen Ende und nur an einer langen Seitenwand angeordnet sein. Ebenso ist es möglich, dass nur an einem axialen Ende an beiden langen Seitenwänden Leitschaufeln abstehen, die entweder ineinander greifen, um eine gemeinsame Schaufelreihe auszubilden oder die jeweils eine eigene Schaufelreihe bilden. Die einzelnen Leitschaufeln können sich dann ausgehend von der zugehörigen langen Seitenwand bspw. bis etwa zu einer Längsmittelebene erstrecken, die mittig zwischen den beiden langen Seitenwänden liegt. Alternativ ist es ebenso möglich, an beiden axialen Enden jeweils zumindest eine Schaufelreihe vorzusehen, wobei die zugehörigen Leitschaufeln dann entweder von derselben langen Seitenwand ausgehen oder von verschiedenen langen Seitenwänden ausgehen.

Eine erfindungsgemäße Abgasanlage umfasst zumindest einen SCR-Katalysator, eine Reduktionsmittelzuführeinrichtung, die zumindest einen Injektor zum Zuführen eines Reduktionsmittels zum Abgasstrom stromauf des SCR-Katalysators aufweist, und wenigstens eine Misch- und/oder Verdampfungseinrichtung der vorbeschriebenen Art, die zwischen dem wenigstens einen Injektor und dem wenigstens einen SCR-Katalysator angeordnet ist.

Ein erfindungsgemäßer SCR-Katalysator umfasst dagegen ein Gehäuse, in dem zumindest ein SCR-Katalysatorelement angeordnet ist, sowie wenigstens eine Misch- und/oder Verdampfungseinrichtung der vorbeschriebenen Art, die im Gehäuse des SCR-Katalysators stromauf des wenigstens einen SCR-Elements angeordnet ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzipdarstellung einer Brennkraftmaschine mit einer Abgasanlage,
- Fig. 2: eine stark vereinfachte, schaltplanartige Ansicht eines SCR-Katalysators,
- Fig. 3: jeweils einen Querschnitt des SCR-Katalysators entsprechend Schnittlinien 111 in Figur 2, bei verschiedenen Ausführungsformen A und B,
- Fig. 4: eine isometrische Ansicht einer Misch- und/oder Verdampfungseinrichtung in einer anströmseitigen Blickrichtung,
- Fig. 5: eine isometrische Ansicht der Einrichtung wie in Fig. 4, jedoch in einer abströmseitigen Blickrichtung.

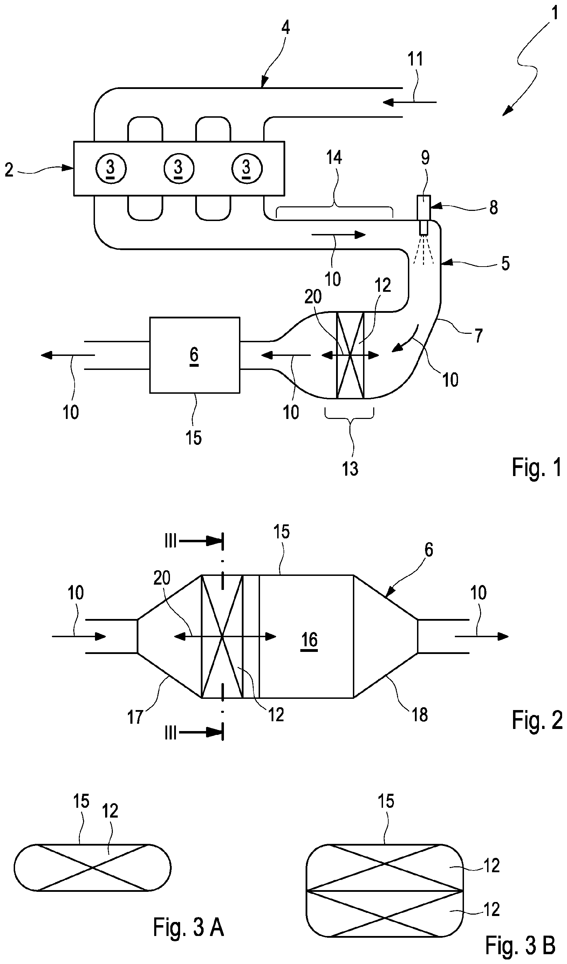

Entsprechend Figur 1 umfasst eine Brennkraftmaschine 1 in üblicher Weise einen Motorblock 2, der mehrere Zylinder 3 aufweist. Eine Frischluftanlage 4 versorgt die Zylinder 3 des Motorblocks 2 mit Frischluft. Ein entsprechender Frischluftstrom ist dabei durch einen Pfeil 11 angedeutet. Eine Abgasanlage 5 führt im Betrieb der Brennkraftmaschine 1 Verbrennungsabgase von den Zylindern 3 des Motorblocks 2 ab. Ferner bewirkt die Abgasanlage 5 eine Abgasreinigung bzw. Abgasnachbehandlung. Hierzu ist die Abgasanlage 5 mit wenigstens einem SCR-Katalysator 6 ausgestattet, der auf geeignete Weise in einen Abgasstrang 7 der Abgasanlage 5 eingebunden ist. Ferner umfasst die Abgasanlage 5 eine Reduktionsmittelzuführeinrichtung 8, die zumindest einen Injektor 9 aufweist, mit dessen Hilfe ein Reduktionsmittel in einen Abgasstrom 10 eingebracht werden kann, der im Betrieb der Brennkraftmaschine 1 im Abgasstrang 7 strömt und durch Pfeile angedeutet ist. Die Eindüsung des flüssigen Reduktionsmittels in den Abgasstrom 10 erfolgt dabei stromauf des SCR-Katalysators 6.

Ferner umfasst die Abgasanlage 5 zumindest eine Misch- und/oder Verdampfungseinrichtung 12, die im Folgenden verkürzt mit Einrichtung 12 bezeichnet wird. Die Einrichtung 12 ist dabei im Abgasstrang 7 zwischen dem Injektor 9 und dem SCR-Katalysator 6 angeordnet, so dass das Abgas mit dem zugeführten Reduktionsmittel zuerst die Einrichtung 12 durchströmen muss, bevor das Gemisch zum SCR-Katalysator 6 gelangt.

Der Abgasstrang 7 kann in einen Bereich 13, in dem die Einrichtung 12 angeordnet ist, einen flachen Durchströmungsquerschnitt aufweisen, während beispielsweise in einem Bereich 14, der sich stromauf des Injektors 9 befindet, ein kreisförmiger Querschnitt vorliegen kann. Dabei können in den Abschnitten 13, 14 die Querschnittsflächen gleich groß sein oder unterschiedlich groß sein.

Bei der in Figur 1 gezeigten Ausführungsform ist die Einrichtung 12 stromauf des SCR-Katalysators 6 im Abgasstrang 7 angeordnet und somit separat vom SCR-Katalysator 6 vorgesehen. Insbesondere befindet sich hier die Einrichtung 12 außerhalb eines Gehäuses 15 des SCR-Katalysators 6.

Im Unterschied dazu zeigt Figur 2 eine Ausführungsform, bei welcher der SCR-Katalysator 6 und die Einrichtung 12 eine integrale Einheit bilden. Hierzu ist im Gehäuse 15 des SCR-Katalysators 6 zumindest ein SCR-Katalysatorelement 16 angeordnet, wobei im Gehäuse 15 stromauf dieses SCR-Katalysatorelements 16 außerdem die Einrichtung 12 angeordnet ist. Somit sind die Einrichtung 12 und das SCR-Katalysatorelement 16 in einem gemeinsamen Gehäuse 15 angeordnet. Im Beispiel der Figur 2 umfasst das Gehäuse 15 einen Einlasstrichter 17 und einen Auslasstrichter 18, wobei die Einrichtung 12 und das SCR-Katalysatorelement 16 zwischen den beiden Trichtern 17, 18 angeordnet sind.

Gemäß den Figuren 3A und 3B kann das Gehäuse 15 zumindest im Bereich der Einrichtung 12 einen flachen Querschnitt besitzen, an den die jeweilige Einrichtung 12 angepasst ist. Figur 3A zeigt dabei eine Ausführungsform, bei welcher der durchströmbare Querschnitt des Gehäuses 15 mit Hilfe einer einzigen Einrichtung 12 ausgefüllt ist. Im Unterschied dazu zeigt Figur 3B eine Ausführungsform, bei welcher der durchströmbare Querschnitt des Gehäuses 15 mit Hilfe von zwei nebeneinander angeordneten Einrichtungen 12 ausgefüllt ist. Entsprechendes gilt dann auch für die Anordnung der Einrichtung 12 im Abgasstrang 7, so dass auch dort zumindest zwei Einrichtungen 12 nebeneinander im Bereich 13 angeordnet sein können, um den durchströmbaren Querschnitt des Abgasstrangs 7 auszufüllen.

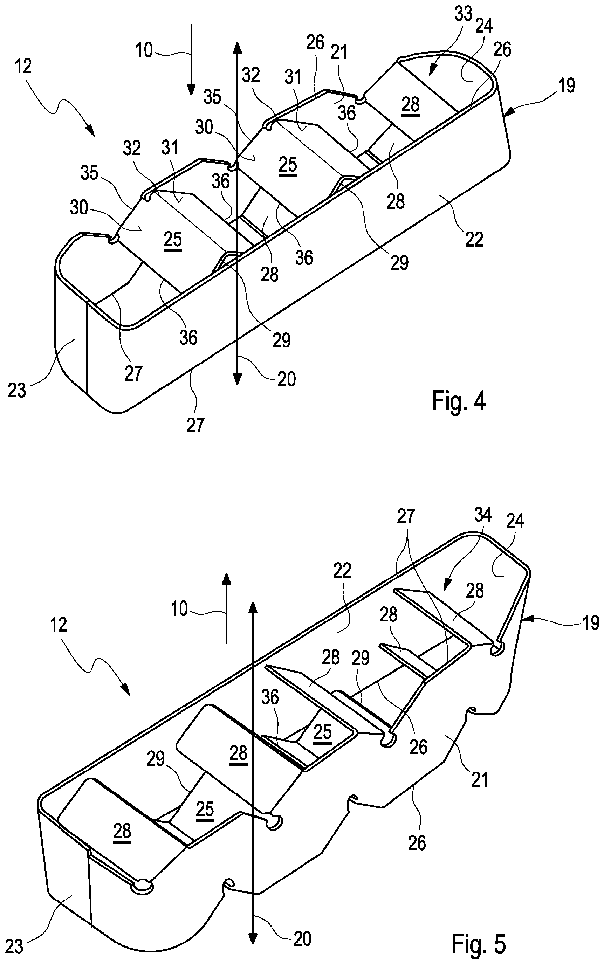

Entsprechend den Figuren 4 und 5 umfasst die jeweilige Einrichtung 12 einen Tragkörper 19, der so geformt ist, dass er einen durchströmbaren Querschnitt der Einrichtung 12, der sich quer zu einer in den Figuren 1, 2, 4 und 5 durch einen Doppelpfeil angedeuteten Axialrichtung 20 der Einrichtung 12 erstreckt, in der Umfangsrichtung umschließt. Bei den hier gezeigten, bevorzugten Ausführungsformen ist dieser durchströmbare Querschnitt der Einrichtung 12 flach konzipiert, sodass auch der Tragkörper 19 eine flache Gestalt erhält. Dementsprechend besitzt der Tragkörper 19 zwei einander gegenüberliegende lange Seitenwände 21, 22 und zwei einander gegenüberliegende kurze Seitenwände 23, 24, über welche die beiden langen Seitenwände 21, 22 miteinander verbunden sind. Die Einrichtung 12 bzw. der Tragkörper 19 besitzt zwei axiale Enden 26, 27, die auch die Seitenwände 21, 22, 23, 24 axial begrenzen. Abhängig von der in den Figuren 4 und 5 durch einen Pfeil angedeuteten Strömungsrichtung der Abgasströmung 10 handelt es sich bei den axialen Enden 26,27 einerseits um eine Anströmseite, die im folgenden ebenfalls mit 26 bezeichnet wird und andererseits um eine Abströmseite, die im folgenden ebenfalls mit 27 bezeichnet wird.

Im Beispiel der Figuren 4 und 5 besitzt der Tragkörper 19 sowohl an der Anströmseite 26 als auch an der Abströmseite 27 mehrere Leitschaufeln 25, 28, die jeweils von einer langen Seitenwand 21 ausgehen und sich in Richtung zur anderen langen Seitenwand 22 erstrecken. Im gezeigten Beispiel gehen die Leitschaufeln 25, 28 jeweils von derselben Seitenwand 21 aus, sodass von der anderen Seitenwand 22 keine Leitschaufeln 25, 28 ausgehen.

Zumindest eine der Leitschaufeln 25, 28, hier die mit 25 bezeichneten Leitschaufeln 25 besitzen ein dachförmiges Profil 29, das zwei Leitflächen 30, 31 sowie einen First 32 oder Scheitel 32 aufweist, der die beiden Leitflächen 30, 31 miteinander verbindet. Im gezeigten Beispiel ist das jeweilige Profil 29 als Giebeldach bzw. winkelförmig konzipiert, wodurch ein kantiger First 32 und ebene Leitflächen 30, 31 vorliegen. Alternativ kann das Profil 29 auch bogenförmig bzw. als Tonnendach konzipiert sein, sodass die Leitflächen 30, 31 abgerundet bzw. bogenförmig sind und über den Scheitel 32 tangential ineinander übergehen.

Im gezeigten Beispiel sind an der Anströmseite 26 mehrere Leitschaufeln 25, 28 quer zu ihrer Längsrichtung, in der sie sich von der einen langen Seitenwand 21 in Richtung zur anderen Seitenwand 22 erstrecken, nebeneinander angeordnet, wodurch sie eine anströmseitige Schaufelreihe 33 bilden. Im Beispiel umfasst die anströmseitige Schaufelreihe 33 genau drei Leitschaufeln 25, 28, nämlich zwei Leitschaufeln 25 mit dachförmigem Profil 29 und eine Leitschaufel 28 mit einem herkömmlichen geradlinigen Profil. An der Abströmseite 27 sind die Leitschaufeln 28 ebenfalls quer zu ihrer Längsrichtung nebeneinander angeordnet, wodurch sie eine abströmseitige Schaufelreihe 34 bilden. Die abströmseitige Schaufelreihe 34 umfasst hier vier gleichartige herkömmliche Schaufeln 28 ohne dachförmiges Profil 29, vorzugsweise mit einem geradlinigen Profil.

Innerhalb der jeweiligen Schaufelreihe 33, 34 erstrecken sich die Schaufeln 25, 28 parallel zueinander und senkrecht zur Axialrichtung 20. Ferner sind sie senkrecht zur Axialrichtung 20 nebeneinander angeordnet.

Beim hier gezeigten Beispiel sind die dachförmigen Leitschaufeln 25 mit ihrem First 32 anströmseitig angeordnet, sodass der First 32 zuerst angeströmt wird und eine Teilung der Abgasströmung 10 bewirkt. Die beiden über den First 32 miteinander verbundenen Leitflächen 30, 31 sind gegenüber der Axialrichtung 20 dann entgegengesetzt angestellt. Bei symmetrischer Bauweise besitzen die Leitflächen 30, 31 gegenüber der Axialrichtung 20 betragsmäßig den gleichen Anstellwinkel.

In der anströmseitigen Schaufelreihe 33 besitzt die herkömmliche Leitschaufel 28 ebenfalls betragsmäßig den gleichen Anstellwinkel gegenüber der Axialrichtung 20 wie die Leitflächen 30, 31 der dachförmigen Leitschaufeln 25.

Im Unterschied dazu zeigt die abströmseitige Schaufelreihe 34 zwei herkömmliche Leitschaufeln 28, die gegenüber der Axialrichtung 20 in der einen Richtung angestellt sind, und zwei herkömmliche Leitschaufeln 28, die gegenüber der Axialrichtung 20, also in der Gegenrichtung angestellt sind. Die Anstellwinkel der einzelnen Leitflächen 30, 31 bzw. der einzelnen Leitschaufeln 28 können dabei jeweils betragsmäßig gleich groß sein und bspw. bei etwa 45° liegen.

Gemäß Fig. 4 ist die jeweilige dachförmige Leitschaufel 25 nur über die eine Leitfläche 30 mit dem Tragkörper 19 bzw. mit dessen langer Seitenwand 21 verbunden. Hierzu kann die jeweilige Leitschaufel 25 entlang einer Verbindungslinie 35 von der jeweiligen langen Seitenwand 21 abgewinkelt sein. Entlang dieser Verbindungslinie 35 ist dann die eine oder erste Leitfläche 30 mit der langen Seitenwand 21 verbunden. Die andere oder zweite Leitfläche 31 ist über den First 32 mit der ersten Leitfläche 30 verbunden und somit nur indirekt mit der jeweiligen langen Seitenwand 21 verbunden. Insbesondere ist die zweite Leitfläche 31 bzgl. des Tragkörpers 19 freistehend, also vollständig ohne Kontakt angeordnet. Insbesondere berührt die jeweilige zweite Leitfläche 31 somit weder die eine lange Seitenwand 21 noch die gegenüberliegende andere lange Seitenwand 22. Im übrigen sind sämtliche Leitschaufeln 25, 28 mit ihrem von der zugehörigen langen Seitenwand 21, von der die jeweilige Leitschaufel 25, 28 ausgeht, entfernten Ende beabstandet zur gegenüberliegenden langen Seitenwand 22 angeordnet, sodass auch hier kein Kontakt zwischen Leitschaufeln 25, 28 und der gegenüberliegenden langen Seitenwand 22 vorliegt.

Die anströmseitig angeordneten dachförmigen Leitschaufeln 25 besitzen als Anströmkante den für beide Leitflächen 30, 31 gemeinsamen First 32. Ferner ist an beiden Leitflächen 30, 31 beabstandet zum First 32 jeweils eine Abströmkante 36 ausgebildet. Die Positionierung der abströmseitigen Leitschaufeln 28 erfolgt zweckmäßig so, dass diese axial fluchtend zu besagten Abströmkanten 36 positioniert sind und diese quer zur Axialrichtung 20 überdecken. Somit kann ein Tropfen, der sich von einer Abströmkante 36 parallel zur Axialrichtung 20 löst, unmittelbar auf eine der abströmseitigen Leitschaufeln 28 auftreffen.

Die Einrichtung 12 ist insbesondere aus einem einzigen Blechstreifen durch Umformung hergestellt, sodass die Leitschaufeln 25, 28 integral an der jeweiligen langen Seitenwand 21 ausgeformt sind und auch die Seitenwände 21, 22, 23, 24 integraler Bestandteil des Tragkörpers 19 sind.

## Patentansprüche

1. Misch- und/oder Verdampfungseinrichtung für eine Abgasanlage (5) einer Brennkraftmaschine (1), insbesondere eines Kraftfahrzeugs,
- mit einem Tragkörper (19), der einen quer zur Axialrichtung (20) der Einrichtung (12) verlaufenden, durchströmbaren Querschnitt der Einrichtung (12) in der Umfangsrichtung umschließt,
- wobei am Tragkörper (19) zumindest eine Leitschaufel (25,28) angeordnet ist, die quer zur Axialrichtung (20) absteht,
- wobei zumindest eine solche Leitschaufel (25) ein dachförmiges Profil (29) aufweist, das zwei über einen First (32) oder Scheitel miteinander verbundene Leitflächen (30,31) besitzt,
**dadurch gekennzeichnet,**
**dass** die jeweilige Leitschaufel (25) nur über die eine Leitfläche (30) mit dem Tragkörper (19) verbunden ist, während die andere Leitfläche (31) gegenüber dem Tragkörper (19) freistehend angeordnet ist.

2. Einrichtung nach Anspruch 1,
**dadurch gekennzeichnet,**
**dass** der jeweilige First (32) oder Scheitel anströmseitig angeordnet ist, wobei die beiden Leitflächen (30,31) gegenüber der Axialrichtung (20) entgegengesetzt angestellt sind.

3. Einrichtung nach Anspruch 1 oder 2,
**dadurch gekennzeichnet,**
**dass** die jeweilige Leitschaufel (25) auch im Bereich des Firstes (32) gegenüber dem Tragkörper (19) freistehend angeordnet ist.

4. Einrichtung nach einem der Ansprüche 1 bis 3,
**dadurch gekennzeichnet,**
**dass** die jeweilige Schaufel (25) zwei rechteckige Leitflächen (30, 31) aufweist, die randseitig jeweils vier Seiten aufweisen, wobei je eine Seite der beiden Leitflächen (30, 31) im First (32) aneinandergrenzen und wobei die jeweilige Leitschaufel (25) nur über eine einzige dieser Seiten mit dem Tragkörper (19) verbunden ist.

5. Einrichtung nach einem der Ansprüche 1 bis 4,
**dadurch gekennzeichnet,**
**dass** mehrere Leitschaufeln (25) vorgesehen sind, die in einer ersten Richtung, die senkrecht auf der Axialrichtung (20) der Einrichtung (12) steht, vom Tragkörper (19) abstehen, in einer zweiten Richtung nebeneinander angeordnet sind, die sich senkrecht zur Axialrichtung (20) und senkrecht zur ersten Richtung erstreckt.

6. Einrichtung nach einem der Ansprüche 1 bis 5,
**dadurch gekennzeichnet,**
**dass** das Profil (29) der jeweiligen Leitschaufel (25) winkelförmig oder bogenförmig ausgestaltet ist.

7. Einrichtung nach einem der Ansprüche 1 bis 6,
**dadurch gekennzeichnet,**
**dass** die jeweilige Leitschaufel (25) mit dem dachförmigen Profil (29) an einer Anströmseite (26) des Tragkörpers (19) angeordnet ist, wobei an einer Abströmseite (27) des Tragkörpers (19) wenigstens eine weitere Leitschaufel (28) angeordnet ist, die ein anderes Profil besitzt.

8. Einrichtung nach Anspruch 7,
**dadurch gekennzeichnet,**
**dass** die jeweilige an der Abströmseite (27) angeordnete Leitschaufel (28) axial fluchtend zu einer Abströmkante (36) einer der Leitflächen (30,31) der an der Anströmseite (26) angeordneten Leitschaufel (25) mit dachförmigem Profil (29) angeordnet ist und diese quer zur Axialrichtung (20) überdeckt.

9. Einrichtung nach einem der Ansprüche 1 bis 8,
**dadurch gekennzeichnet,**
- **dass** der durchströmbare Querschnitt der Einrichtung (12) flach ist,
- **dass** der Tragkörper (19) zwei einander gegenüberliegende lange Seitenwände (21,22) und zwei einander gegenüberliegende kurze Seitenwände (23,24) aufweist,
- **dass** die kurzen Seitenwände (23,24) jeweils die beiden langen Seitenwände (21,22) miteinander verbinden,
- **dass** die wenigstens eine Leitschaufel (25) mit dachförmigem Profil (29) an einer langen Seitenwand (21,22) zumindest an einem axialen Ende (26,27) angeordnet ist und in Richtung zur anderen langen Seitenwand (21,22) absteht.

10. Abgasanlage für eine Brennkraftmaschine (1), insbesondere eines Kraftfahrzeugs,
- mit wenigstens einem SCR-Katalysator (6),
- mit einer Reduktionsmittelzuführeinrichtung (8), die zumindest einen Injektor (9) zum Zuführen eines Reduktionsmittels zum Abgasstrom (10) stromauf des SCR-Katalysators (6) aufweist,
- mit wenigstens einer Misch- und/oder Verdampfungseinrichtung (12) nach einem der Ansprüche 1 bis 9, die zwischen dem wenigstens einen Injektor (9) und dem wenigstens einen SCR-Katalysator (6) angeordnet ist.

11. SCR-Katalysator für eine Abgasanlage (5) einer Brennkraftmaschine (1), insbesondere eines Kraftfahrzeugs,
- mit einem Gehäuse (15), in dem zumindest ein SCR-Katalysatorelement (16) angeordnet ist,
- mit mindestens einer Misch- und/oder Verdampfungseinrichtung (12) nach einem der Ansprüche 1 bis 9, die im Gehäuse (15) stromauf des wenigstens einen SCR-Katalysatorelements (16) angeordnet ist.

## Claims

1. A mixing and/or evaporating device for an exhaust system (5) of a combustion engine (1), in particular of a motor vehicle,
- with a support body (19), which encloses a cross section of the device (12) through which a flow can flow and which runs transversely to the axial direction (20) of the device (12) in the circumferential direction,
- wherein on the support body (19) at least one guide blade (25, 28) is arranged, which stands away transversely to the axial direction (20),
- wherein at least one such guide blade (25) has a roof-shaped profile (29) which comprises two guide surfaces (30, 31) which are interconnected via a ridge (32) or apex,
**characterized in that**
the respective guide blade (25) is only connected to the support body (19) via the one guide surface (30), while the other guide surface (31) is arranged in a free-standing manner relative to the support body (19).

2. The device according to Claim 1,
**characterized in that**
the respective ridge (32) or apex is arranged on the onflow side, wherein the two guide surfaces (30, 31) are in opposite direction relative to the axial direction (20).

3. The device according to Claim 1 or 2,
**characterized in that**
the respective guide blade (25) is also arranged in a free-standing manner in the region of the ridge (32) relative to the support body (19).

4. The device according to any one of Claims 1 to 3,
**characterized in that**
the respective blade (25) has two rectangular guide surfaces (30, 31) which on the edge side have respectively four sides, wherein in each case a side of the two guide surfaces (30, 31) adjoin one another in the ridge (32) and wherein the respective guide blade (25) is connected with the support body (19) only via a single one of these sides.

5. The device according to any one of Claims 1 to 4,
**characterized in that**
several guide blades (25) are provided, which project from the support body (19) in a first direction, which stands perpendicularly on the axial direction (20) of the device (12), are arranged adjacent to one another in a second direction, which extends perpendicularly to the axial direction (20) and perpendicularly to the first direction.

6. The device according to any one of the Claims 1 to 5,
**characterized in that**
the profile (29) of the respective guide blade (25) is configured angularly or arc-shaped.

7. The device according to any one of the Claims 1 to 6,
**characterized in that**
the respective guide blade (25) with the roof-shaped profile (25) is arranged on an onflow side (26) of the support body (19), wherein on an outflow side (27) of the support body (19) at least one further guide blade (28) is arranged, which has another profile.

8. The device according to Claim 7,
**characterized in that** the respective guide blade (28) arranged on the outflow side (27) is arranged axially aligned with an outflow edge (36) of one of the guide surfaces (30, 31) of the guide blade (25) with roof-shaped profile (29) arranged on the onflow side (26), covering it transversely to the axial direction (20).

9. The device according to any one of the Claims 1 to 8,
**characterized**
- **in that** the cross section of the device (12) through which a flow can flow is flat,
- **in that** the support body (19) has two long side walls (21, 22) located opposite each other and two short side walls (23, 24) located opposite each other,
- **in that** the short side walls (23, 24) each interconnect the two side walls (21, 22),
- **in that** the at least one guide blade (25) with roof-shaped profile (29) is arranged on a long side wall (21, 22) at least on an axial end (26, 27) and stands away in the direction of the other long side wall (21, 22).

10. An exhaust system for a combustion engine (1), in particular of a motor vehicle,
- with at least one SCR catalytic converter (6),
- with a reduction agent feeding device (8), which comprises at least one injector (9) for feeding a reduction agent to the exhaust gas flow (10) upstream of the SCR catalytic converter (6),
- with at least one mixing and/or evaporating device (12) according to any one of the Claims 1 to 9, which is arranged between the at least one injector (9) and the at least one SCR catalytic converter (6).

11. An SCR catalytic converter for an exhaust system (5) of a combustion engine (1), in particular of a motor vehicle,
- with a housing (15), in which at least one SCR catalytic converter element (16) is arranged,
- with at least one mixing and/or evaporating device (12) according to any one of the Claims 1 to 9, which is arranged in the housing (15) upstream of the at least one SCR catalytic converter element (16).

## Revendications

1. Dispositif de mélange et/ou d'évaporation pour un système d'échappement (5) d'un moteur à combustion interne (1), en particulier d'un véhicule automobile,
- avec un corps de support (19), qui renferme dans la direction périphérique une section transversale, s'étendant de manière transversale par rapport à la direction axiale (20) du dispositif (12), pouvant être traversée par un flux, du dispositif (12),
- dans lequel au moins une aube directrice (25, 28) est disposée au niveau du corps de support (19), laquelle dépasse de manière transversale par rapport à la direction axiale (20),
- dans lequel au moins une aube directrice (25) de ce type présente un profil (29) en forme de toit, lequel possède deux surfaces directrices (30, 31) reliées l'une à l'autre par l'intermédiaire d'un faîte (32) ou d'un sommet,
**caractérisé en ce**
**que** l'aube directrice (25) respective est reliée au corps de support (19) seulement par l'intermédiaire de l'une des surfaces directrices (30), tandis que l'autre surface directrice (31) est disposée de manière indépendante par rapport au corps de support (19).

2. Dispositif selon la revendication 1,
**caractérisé en ce**
**que** le faîte (32) ou sommet respectif est disposé côté flux entrant, dans lequel les deux surfaces directrices (30, 31) sont placées à l'opposé par rapport à la direction axiale (20).

3. Dispositif selon la revendication 1 ou 2,
**caractérisé en ce**
**que** l'aube directrice (25) respective est disposée également dans la zone du faîte (32) de manière indépendante par rapport au corps de support (19).

4. Dispositif selon l'une quelconque des revendications 1 à 3,
**caractérisé en ce**
**que** l'aube (25) respective présente deux surfaces directrices (30, 31) rectangulaires, qui présentent, côté bord, respectivement quatre côtés, dans lequel respectivement un côté des deux surfaces directrices (30, 31) se jouxtent dans le faîte (32) et dans lequel l'aube directrice (25) respective est reliée au corps de support (19) seulement par l'intermédiaire d'un seul desdits côtés.

5. Dispositif selon l'une quelconque des revendications 1 à 4,
**caractérisé en ce**
**que** plusieurs aubes directrices (25) sont prévues, lesquelles dépassent du corps de support (19) dans une première direction, qui est perpendiculaire par rapport à la direction axiale (20) du dispositif (12), sont disposées de manière juxtaposée dans une deuxième direction, qui s'étend de manière perpendiculaire par rapport à la direction axiale (20) et de manière perpendiculaire par rapport à la première direction.

6. Dispositif selon l'une quelconque des revendications 1 à 5,
**caractérisé en ce**
**que** le profil (29) de l'aube directrice (25) respective est configuré de manière à présenter une forme angulaire ou une forme courbée.

7. Dispositif selon l'une quelconque des revendications 1 à 6,
**caractérisé en ce**
**que** l'aube directrice (25) respective avec le profil (29) en forme de toit est disposée au niveau d'un côté de flux entrant (26) du corps de support (19), dans lequel au moins une autre aube directrice (28) est disposée au niveau d'un côté de flux sortant (27) du corps de support (19), laquelle possède un autre profil.

8. Dispositif selon la revendication 7,
**caractérisé en ce**
**que** l'aube directrice (28) respective disposée au niveau du côté de flux sortant (27) est disposée de manière alignée axialement par rapport à une arête de flux sortant (36) d'une des surfaces directrices (30, 31) de l'aube directrice (25) disposée au niveau du côté de flux entrant (26), avec le profil (29) en forme de toit et recouvre cette dernière de manière transversale par rapport à la direction axiale (20).

9. Dispositif selon l'une quelconque des revendications 1 à 8,
**caractérisé en ce**
- **que** la section transversale pouvant être traversée par un flux du dispositif (12) est plate,
- **que** le corps de support (19) présente deux parois latérales (21, 22) longues se faisant face l'une l'autre et deux parois latérales (23, 24) courtes se faisant face l'une l'autre,
- **que** les parois latérales (23, 24) courtes relient entre elles respectivement les deux parois latérales (21, 22) longues,
- **que** l'au moins une aube directrice (25) avec un profil (29) en forme de toit est disposée au niveau d'une paroi latérale (21, 22) longue au moins au niveau d'une extrémité (26, 27) axiale et dépasse en direction de l'autre paroi latérale (21, 22) longue.

10. Système d'échappement pour un moteur à combustion interne (1), en particulier d'un véhicule automobile,
- avec au moins un catalyseur à réduction catalytique sélective (SCR) (6),
- avec un dispositif d'amenée d'agent de réduction (8), qui présente au moins un injecteur (9) servant à amener un agent de réduction au flux de gaz d'échappement (10) en amont du catalyseur SCR (6),
- avec au moins un dispositif de mélange et/ou d'évaporation (12) selon l'une quelconque des revendications 1 à 9, qui est disposé entre l'au moins un injecteur (9) et l'au moins un catalyseur SCR (6).

11. Catalyseur SCR pour un système d'échappement (5) d'un moteur à combustion interne (1), en particulier d'un véhicule automobile,
- avec un boîtier (15), dans lequel au moins un élément de catalyseur SCR (16) est disposé,
- avec au moins un dispositif de mélange et/ou d'évaporation (12) selon l'une quelconque des revendications 1 à 9, qui est disposé dans le boîtier (15) en amont de l'au moins un élément catalyseur SCR (16).
